(19) Europäisches Patentamt

European Patent Office

Office européen des brevets

(11) EP 1 401 118 B1

(12) EUROPEAN PATENT SPECIFICATION

(45) Date of publication and mention
of the grant of the patent:
05.04.2006 Bulletin 2006/14

(51) Int Cl.:
H04B 7/005 (2006.01)

(21) Application number: 02256578.2

(22) Date of filing: 23.09.2002

(54) **Method and apparatus for power control in a mobile radio system**

Verfahren und Anordnung zur Leistungsregelung in einem mobilen Funksystem

Procédé et appareil pour la commande de puissance dans un système de télécommunication mobile

(84) Designated Contracting States:
AT BE BG CH CY CZ DE DK EE ES FI FR GB GR
IE IT LI LU MC NL PT SE SK TR

(43) Date of publication of application:
24.03.2004 Bulletin 2004/13

(73) Proprietor: TELEFONAKTIEBOLAGET LM
ERICSSON (publ)
164 83 Stockholm (SE)

(72) Inventors:
• Bernhardsson, Bo
224 75 Lund (SE)
• Nilsson, Johan
236 38 Höllviken (SE)

(74) Representative: O'Connell, David Christopher
HASELTINE LAKE,
Redcliff Quay
120 Redcliff Street
Bristol BS1 6HU (GB)

(56) References cited:
EP-A- 0 987 833      EP-A- 1 215 833
US-A- 5 991 284      US-B1- 6 173 162

• PROAKIS JOHN G.: 'Digital communications 2nd
ed.', 1989, MCGRAW-HILL, UNITED STATES *
page 132; figure 2.4.3a *

**Description**

**Technical Field of the Invention**

The present invention relates to power control in Radio Resource Management, and in particular to a system with multiple transport channels.

**Description of Related Art**

In modern telecommunications networks, the utilisation of air interface resources and the maintenance of Quality of Service (QoS) is determined by Radio Resource Management (RRM). RRM is responsible for the following functions; handover, power control, admission control, load control and packet scheduling. Each of these functions is implemented by a relevant RRM algorithm.

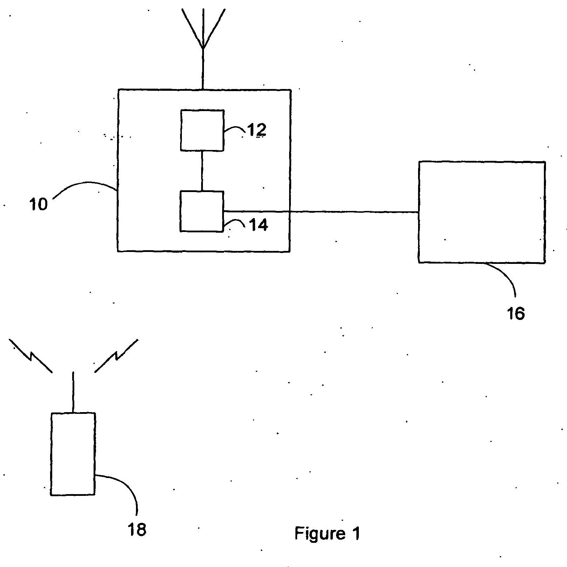

Third generation telecommunications networks need to support high quality services and to multiplex several services on one connection. In particular, power control plays an important role in the provision of the required QoS, by keeping the interference levels in the air interface at a minimum. The power control algorithm may be implemented at User Equipment (UE) level, Base Station (BS) level or Radio Network Controller (RNC) level.
These three network elements are illustrated in Figure 1, wherein the BS 10 includes a transceiver 12 and a processor 14, which processor 14 has a fixed connection to the RNC 16. The MS 18 is not generally of a fixed location.

Aspects of power control which are specific to third generation systems (such as Wideband Code Division Multiple Access, WCDMA) and are not present in second generation systems (such as Global System for Mobile Communications, GSM) include fast power control and outer loop power control. Fast power control in WCDMA has a frequency of approximately 1.5kHz and is supported in both uplink and downlink. The outer loop power control algorithm estimates the received signal quality in order to adjust the Signal to Interference Ratio (SIR) reference for the fast power control so that the required QoS is maintained. Signal quality can be affected by changes in the MS speed or the multipath propagation environment. Outer loop power control in WCDMA has a frequency of approximately 10-100Hz, and is needed in both uplink and downlink because there is fast power control in both uplink and downlink.

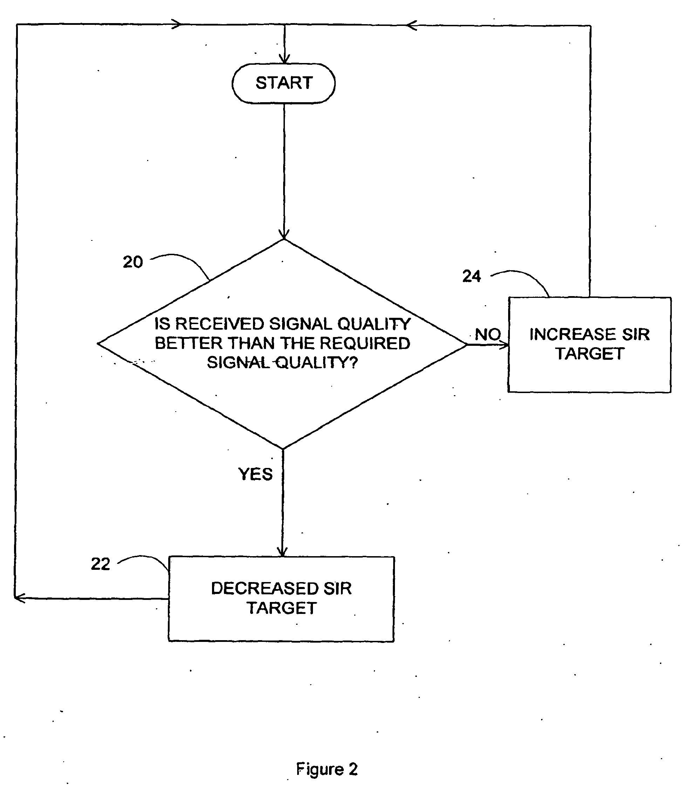

Fig 2 is a flow chart outlining a general outer loop power control algorithm. An initial assessment 20 is made as to whether the quality of signal received on the uplink is better than the required quality of signal. Where this is the case, the SIR reference for fast power control is decreased 22 to avoid wasted network capacity. In contrast, where the quality of signal is less than the required quality, the SIR reference is increased 24 so that the required QoS is maintained.

QoS is a direct function of errors arising from the received signals, which errors arise from inaccurate SIR estimation, signalling errors and delays in the power control loop. In order to assess the quality of signal received on the uplink, several known methods can be employed. For example, the quality assessment can be based on an estimated physical channel Bit Error Rate (BER), received SIR or a Cyclic Redundancy Check (CRC).

The CRC assessment is generally utilised for network services where errors are allowed to occur fairly frequently, at least once every few seconds. This can be in non-real-time packet data service where the block error rate (BLER) can be up to 10-20% before retransmissions, and the speech service where typically BLER = 1% provides the required quality.

One possible outer loop power control algorithm is given by the so-called proportional-integral (PI) algorithm. This can be characterised as follows:

$$SIR_r(k) = kp * e(k) + ki * I(k)$$

where $k$ denotes block number, $SIR_r(k)$ denotes the SIR reference for block $k$, $kp$ and $ki$ are parameters which control algorithm convergence speed and stability, e(k) is a variable which indicates the difference between required QoS and actual QoS, and I(k) is a parameter which sets a steady state value for the SIR reference, where $I(k + 1) = I(k) + e(k)$. For example one could use;

$$e(k) = -BLER_r \qquad \qquad if\ CRC\ ok,$$

$$e(k) = 1 - BLER_r \qquad\qquad\qquad if\ CRC\ not\ ok$$

where $BLER_r$ refers to the BLER reference. It is also possible to filter e(k) to get a smoother behaviour. Examples of values of the constants *kp* and *ki* are *kp* = 0.3 and *ki* = 0.8. A special case is given by the parameter choice:

$$kp = 0$$

$$ki = SIR_{inc} / (1 - BLER_r)$$

which gives the so-called jump algorithm disclosed in "WCDMA for UMTS" edited by Holma and Toskala, Wiley & Sons Ltd, 2000, pages 187 - 203. This jump algorithm is based on the result of a CRC assessment of the data and can be characterised as follows:

$$SIR_r(k+1) := \begin{cases} SIR_r(k) + SIR_{inc} & if\ CRC\ not\ OK, \\ SIR_r(k) - \dfrac{BLER_r}{1 - BLER_r} SIR_{inc} & if\ CRC\ OK. \end{cases}$$

where $SIR_{inc}$ refers to an incremental increase in the SIR reference for the channel under consideration. $SIR_{inc}$ is typically 0.3dB to 1.0dB.

Both the PI algorithm and the jump algorithm calculate an updated SIR reference value based on the value of the previous SIR reference value. Where-the received signal quality is better than the required signal quality, then the updated SIR reference value will be an incremental decrease. Where the received signal quality is worse than the required signal quality, then the updated SIR reference value will be an incremental increase.

In order to make efficient use of network capacity, the outer loop power control should keep the SIR reference as low as possible at all times. Although, an SIR reference value that is too low will lead to decreased QoS. The data traffic situation can vary over time and so a flexible and reliable system is required to ensure that users experience an acceptable QoS.

This known power control function does not enable a suitable SIR reference to be determined where multiple transport channels are used. When multiple transport channels are multiplexed on a physical channel a common SIR reference must be found which gives sufficiently good performance for all transport channels. The necessary SIR level is a complicated function of coding scheme, channel quality, equipment velocity and other parameters and can not be calculated easily. The number of possible combinations of transport channels is also very large which makes utilisation of a look-up table unfeasible.

US 6,173,162 (Dahlman et al) discloses methods of controlling the power levels of transmitted signals in telecommunications systems. A user may be assigned a plurality of radio bearers associated with a plurality of physical channels for communicating with a radiocommunication system. A fast power control loop monitors a reference channel and adjusts transmit power in accordance with SIR target value. The power control commands can be either up or down dependent on quality comparisons with a single quality of service threshold.

**Summary**

The present invention seeks to provide a power control function in RRM in which the required QoS is maintained for multiple transport channels and problems in known systems associated with data traffic changes are alleviated.

According to a first aspect of the present invention, there is provided a method of power control in a mobile telecommunications network, wherein a plurality of transport channels are multiplexed on a common physical channel, the method comprising the steps of: calculating a respective signal strength reference value for each of the plurality of transport channels in use based on a previously calculated value for that transport channel; maintaining the calculated signal strength reference value for each transport channel at or above a predetermined minimum signal strength reference value; and determining a signal strength reference value to be used for all of said plurality of transport channels in use, as the highest of all of the calculated respective signal strength reference values; wherein the signal strength reference value for a transport channel is a Signal-to-Interference Ratio (SIR) reference value, and wherein the step of calculating a SIR reference value for each of the plurality of transport channels in use is performed by applying the algorithm:

$$SIR_r(k) = kp * e(k) + ki * I(k)$$

where *k* denotes block number, $SIR_r(k)$ denotes the SIR reference for block k, e(k) is a variable which indicates the difference between a required quality of service (QoS) and actual QoS, *kp* and *ki* are parameters which control algorithm convergence speed and stability and I(k+1)= I(k)+e(k).

According to a second aspect of the present invention, there is provided a mobile station (18) for use in a telecommunications network, wherein the mobile station comprises means for performing power control, the means for performing power control comprising: means adapted to calculate a signal strength reference value for each of a plurality of transport channels in use based on a previously calculated value for that transport channel, wherein the plurality of transport channels are multiplexed on a common physical channel and wherein the signal strength reference value for a transport channel is a Signal-to-Interference Ratio (SIR) value; means adapted to maintain the calculated signal strength reference value for a transport channel at or above a predetermined minimum signal strength reference value; and means adapted to determine a signal strength reference value to be used for all of said plurality of transport channels in use, as the highest of all of the calculated signal strength reference values; wherein the means adapted to calculate a SIR value for each of the plurality of transport channels in use, is adapted to apply the algorithm:

$$SIR_r(k) = kp * e(k) + ki * I(k)$$

where k denotes block number, $SIR_r(k)$ denotes the SIR reference for block k, e(k) is a variable which indicates the difference between a required quality of service (QoS) and actual QoS, kp and ki are parameters which control algorithm convergence speed and stability and I(k+1)= I(k)+e(k).

According to a third aspect of the present invention, there is provided a base station for use in a telecommunications network, wherein the base station comprises means for performing power control, the means for performing power control comprising: means adapted to calculate a signal strength reference value for each of a plurality of transport channel in use based on a previously calculated value for that transport channel, wherein the plurality of transport channels are multiplexed on a common physical channel and wherein the signal strength reference value for a transport channel is a Signal-to-Interference Ratio (SIR) value; means adapted to maintain the calculated signal strength reference value for a transport channel at or above a predetermined minimum signal strength reference value; and means adapted to determine a signal strength reference value to be used for all of said plurality of transport channels in use, as the highest of all of the calculated signal strength reference values; wherein the means adapted to calculate a SIR value for each of the plurality of transport channels in use, is adapted to apply the algorithm:

$$SIR_r(k) = kp * e(k) + ki * I(k)$$

where *k* denotes block number, $SIR_r(k)$ denotes the SIR reference for block k, e(k) is a variable which indicates the difference between a required quality of service (QoS) and actual QoS, kp and ki are parameters which control algorithm convergence speed and stability and I(k+1)= I(k)+e(k).

According to a fourth aspect of the present invention, there is provided a telecommunications network, comprising means for performing power control, the means for performing power control comprising: means adapted to calculate a signal strength reference value for each of a plurality of transport channels in use based on a previously calculated value for that transport channel, wherein the plurality of transport channels are multiplexed on a common physical channel and wherein the signal strength reference value for a transport channel is a Sig nal-to-Interference Ratio (SIR) value; means adapted to maintain the calculated signal strength reference value for a transport channel at or above a predetermined minimum signal strength reference value; and means adapted to determine a signal strength reference value to be used for all of said plurality of transport channels in use, as the highest of all of the calculated signal strength reference values; wherein the means adapted to calculate a SIR value for each of the plurality of transport channels in use, is adapted to apply the algorithm:

$$SIR_r(k) = kp * e(k) + ki * I(k)$$

where k denotes block number, $SIR_r(k)$ denotes the SIR reference for block k, e(k) is a variable which indicates the difference between a required quality of service (QoS) and actual QoS, $kp$ and $ki$ are parameters which control algorithm convergence speed and stability and I(k+1)= I(k)+e(k).

It should be emphasised that the term "comprises/comprising" when used in this specification is taken to specify the presence of stated features, integers, steps or components but does not preclude the presence or addition of one or more other features, integers, steps, components or groups thereof.

**Brief Description of the Drawings**

For a better understanding of the present invention, and to show how it may be put into effect, reference will now be made, by way of example, to the accompanying drawings in which:

Figure 1 is a schematic diagram of the basic features in a radio telecommunications network;

Figure 2 shows a flow chart outlining a general outer loop power control algorithm;

Figure 3 shows a flow chart outlining use of an extended outer loop power control algorithm in accordance with the present invention; and

Figure 4 is a schematic diagram of the network structure in accordance with the present invention.

**Detailed Description of Embodiments**

Where a telecommunications network has several channels in use. Radio Resources Management (RRM) implements an extended outer loop power control algorithm. This algorithm functions to determine a single SIR reference value suitable for all of the channels in use at one time. This is achieved by determining a separate used SIR reference value for each channel l, where l={1,...,number of channels in use}. The initial step may be characterised as follows:

$$SIR_r(l,0) = \frac{1}{b_2}\left(\log_{10}(BLER_r(l)) - a_2\right)$$

In practice, $a_2$ could be 0.6 and $b_2$ could be -1.5. Clearly, this SIR reference is dependent upon the channel user's QoS requirements.

In order to update the SIR reference for each allotted channel at the following block, k=1, a quality assessment is performed on that channel (shown below using a CRC). The updating step may be characterised as follows:

$$SIR_r(l, k+1) := \begin{cases} SIR_r(l,k) + SIR_{inc} & \text{if } CRC(l) \text{ not OK}, \\ SIR_r(l,k) - \dfrac{BLER_r(l)}{1 - BLER_r(l)} SIR_{inc} & \text{if } CRC(l) \text{ OK}. \end{cases}$$

where $SIR_{inc}$ refers to an incremental increase in the SIR reference for channel l. $SIR_{inc}$ is typically 0.3dB to 1.0dB, and may be the same for all channels. In other words, where the received signal quality is better than the required signal quality, then the updated SIR reference value will be an incremental decrease. Where the received signal quality is worse than the required signal quality, then the updated SIR reference value will be an incremental increase.

The updated SIR reference value is compared with a predetermined minimum SIR reference value. Where the former is greater than the latter, then the updated SIR reference value is used. If the updated SIR reference value calculated is below the predetermined minimum SIR reference value, the predetermined minimum SIR reference value is substituted for the updated SIR reference value. This comparison may be characterised as follows:

$$SIR_r(l, k+1) := \max\big(SIR_r(l, k+1), SIR_{\min}\big)$$

In order for the network to set an overall updated SIR reference value for all allotted-channels the following equation applies:

$$SIR_r(k) = \overset{\max}{\underset{l}{}} SIR_r(l, k)$$

All channels multiplexed on a common physical channel must use a common SIR reference value. Thus, the highest updated SIR reference value for all allotted channels for a particular block $k$, is used as the overall SIR reference value for the group of channels for that block.

The reason for setting a predetermined minimum SIR reference value for each channel is that, if this were not done, the calculated SIR reference value for a channel could reach very low values. This is the case if the channel achieves better QoS than requested for a long period of time. If the channel multiplexing situation changes, for instance when a new channel is dropped or added, or when the QoS parameters for a channel changes, the used SIR reference value may become insufficient to achieve accurate QoS for this channel. Without the predetermined minimum SIR reference value, it could take excessive time for the calculated updated SIR reference value to reach an acceptable level again.

Typically, setting $SIR_{min}$ to -10dB will enable all allotted channels to regain control of the SIR reference within a reasonable time (generally less than 1 second) if the traffic situation changes.

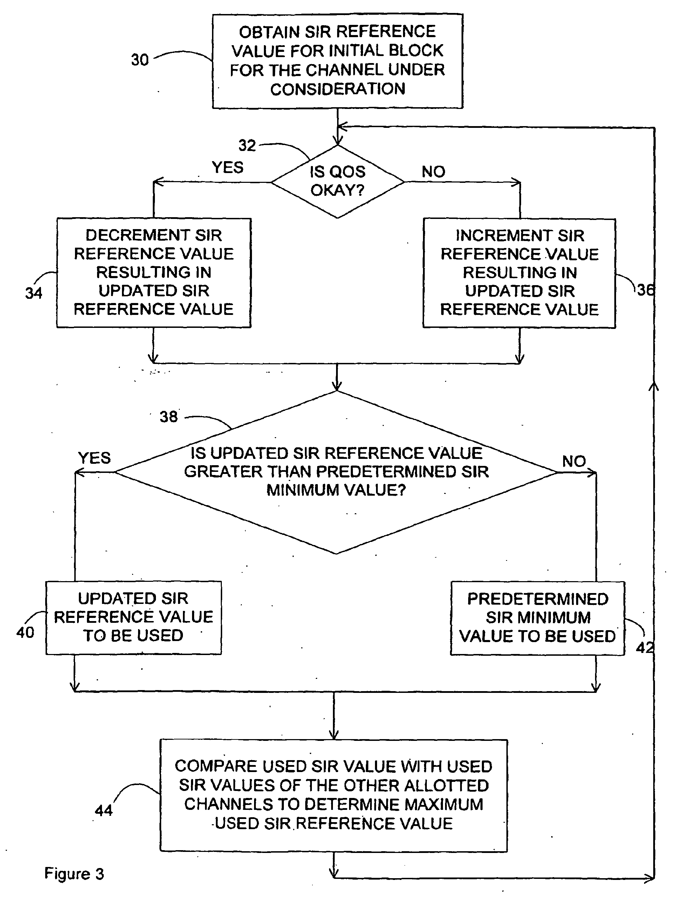

In Figure 3, a RRM operates in step 30 to obtain an SIR reference value for the initial block for the allotted channel under consideration. A QoS assessment is performed in step 32 by means of, for example, a CRC. Where it is determined that the current quality is acceptable, the SIR reference value is decremented in step 34 resulting in an updated SIR reference value. However, where the QoS is inadequate for user requirements the SIR reference value is incremented in step 36 in order to achieve the updated SIR reference value. A comparison is performed in step 38 to determine whether the updated SIR reference value is greater than a predetermined SIR minimum value. Thus, where the updated SIR reference value is greater than the predetermined SIR minimum value then the updated SIR reference value is utilised in step 40 for the block and channel under consideration. However, where the updated SIR reference value is less than the predetermined SIR minimum value, the predetermined SIR minimum value is utilised in step 42 instead of the updated SIR reference value.

It will be apparent to the skilled person that the outer loop power control algorithm implemented on the channel under consideration in Figure 3 can be implemented for each of several further allotted channels within the telecommunications network under the control of the RRM. The SIR reference value to be used for each channel in respect of the same block is compared in step 44 to determine a maximum used SIR reference value, which value is said to control the SIR reference value for the telecommunications network. Thus, by use of the used SIR reference values of the allotted channels the RRM is implementing an extended outer loop power control algorithm in accordance with the present invention.

It is necessary for this process to be repeated for each of blocks $k$=0 , 1 , 2 , 3,...,n, to ensure an acceptable QoS is provided even when the variables involved (such as number of allotted channels, maximum SIR reference value required, etc.) change.

Thus, the SIR reference value is set for multiple transport channels and advantageously the complexity of the extended outer loop power control algorithm is very low.

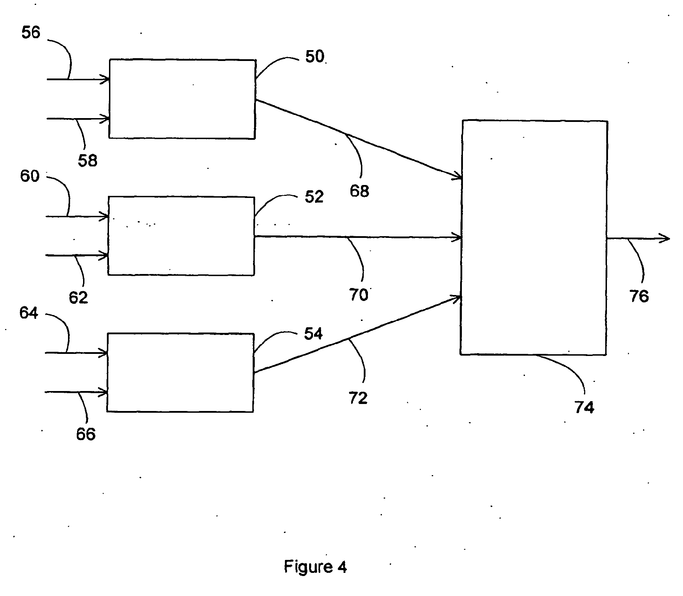

Figure 4 further illustrates the flow chart of Figure 3, showing the use of a common maximum used SIR reference value for multiple channels within a network. A first RMM 50, a second RMM 52 and a third RMM 54 each have two inputs. The single output 68 70 72 from the first, second and third controllers 50 52 54 are multiplexed onto a single physical channel 76 via a single comparison means 74.

In operation, the first RMM 50 has two input signals, namely a first SIR reference value 56 and a first predetermined SIR minimum value 58. The second RMM 52 has two input signals, a second SIR reference value 60 and a second predetermined SIR minimum value 62. Similarly, the third RMM 54 has two input signals, a third SIR reference value 64 and a third predetermined SIR minimum value 66. Each RMM performs a QoS assessment and, dependent upon the result, increments or decrements the SIR reference value. Each RMM has a single output 68 70 72 comprising a used SIR value specific to that channel. The comparison means 74 functions to determine the maximum used SIR reference value from the first, second and third used SIR values 68 70 72 input to the comparison means 74. This value is said to control the SIR reference value for the telecommunications network. The QoS assessment performed by each RRM implements an extended outer loop power control algorithm in accordance with the present invention.

It will be apparent to the skilled person that the above specified algorithm is not exhaustive and variations may be employed to achieve a similar result whilst employing the same inventive concept. For example, the extended outer loop power control algorithm can be implemented at a mobile station level, base station level or radio network controller level.

Furthermore, the skilled person will be aware that the present invention may be implemented in respect of any outer loop power control algorithm, such as the PI algorithm or the jump algorithm.

It can therefore be seen that the present invention provides power control in RRM which has significant advantages over the conventional systems.

**Claims**

1. A method of power control in a mobile telecommunications network, wherein a plurality of transport channels are multiplexed on a common physical channel (76), the method comprising the steps of:

   calculating a respective signal strength reference value for each of the plurality of transport channels (68, 70, 72) in use based on a previously calculated value for that transport channel;
   maintaining (40, 42) the calculated signal strength reference value for each transport channel at or above a predetermined minimum signal strength reference value; and
   determining (44) a signal strength reference value to be used for all of said plurality of transport channels in use, as the highest of all of the calculated respective signal strength reference values;

   wherein the signal strength reference value for a transport channel is a Signal-to-Interference Ratio (SIR) reference value, and wherein the step of calculating a SIR reference value for each of the plurality of transport channels in use is performed by applying the algorithm:

$$SIR_r(k) = kp * e(k) + ki * I(k)$$

   where $k$ denotes block number, $SIR_r(k)$ denotes the SIR reference for block k, e(k) is a variable which indicates the difference between a required quality of service (QoS) and actual QoS, $kp$ and $ki$ are parameters which control algorithm convergence speed and stability and I(k+1)= I(k)+e(k).

2. The method as claimed in claim 1, further comprising incrementally increasing or decreasing the signal strength reference value dependent upon a quality criteria check.

3. The method as claimed in claim 1, wherein e(k) takes different values dependent upon whether a predetermined quality criterion is met, such that:

$$e(k) = -BLER_r \qquad \qquad if\ quality\ criterion\ met,$$

$$e(k) = 1 - BLER_r \qquad \qquad if\ quality\ criterion\ not\ met$$

   where $BLER_r$ refers to the block error rate (BLER) reference.

4. The method as claimed in claim 1, wherein the parameters:

$$kp = 0$$

$$ki = SIR_{inc} / (1 - BLER_r)$$

are used, where $SIR_{inc}$ refers to an incremental increase in the SIR reference.

5. The method as claimed in claims 1, 3 and 4, wherein the step of maintaining the calculated signal strength reference value for a transport channel is determined via a Proportional Integral (PI) algorithm and **characterised by**:

$$SIR_r(l, k+1) := \begin{cases} SIR_r(l,k) + SIR_{inc} & \text{if quality criterion not met,} \\ SIR_r(l,k) - \dfrac{BLER_r(l)}{1 - BLER_r(l)} SIR_{inc} & \text{if quality criterion met.} \end{cases}$$

where $SIR_r$ $(l,k)$ denotes the SIR reference for transport channel $l$=1, ...,N at block $k$. $BLER_r(l)$ refers to the BLER reference for transport channel 1.

6. The method as claimed in claim 5, wherein the quality criterion check is based on a Bit Error Rate (BER) reference value.

7. The method as claimed in claim 5, wherein the quality criterion check is based on a Cyclic Redundancy Check (CRC) reference value.

8. The method as claimed in claim 5, comprising calculating an initial SIR reference value $SIR_r(1, 0)$ for each of the plurality of transport channels in use for an initial block $k$=0 as:

$$SIR_r(l,0) = \frac{1}{b_2} \left( \log_{10}(BLER_r(l)) - a_2 \right)$$

where $a_2$ and $b_2$ are transport channel model parameters.

9. The method as claimed in claims 1 to 8, wherein the mobile telecommunications network uses WCDMA.

10. A mobile station (18) for use in a telecommunications network, wherein the mobile station comprises means for performing power control, the means for performing power control comprising:

means adapted to calculate a signal strength reference value for each of a plurality of transport channels (68, 70, 72) in use based on a previously calculated value for that transport channel, wherein the plurality of transport channels are multiplexed on a common physical channel and wherein the signal strength reference value for a transport channel is a Signal-to-Interference Ratio (SIR) value;
means adapted to maintain the calculated signal strength reference value for a transport channel at or above a predetermined minimum signal strength reference value; and
means adapted to determine a signal strength reference value to be used for all of said plurality of transport channels in use, as the highest of all of the calculated signal strength reference values;

wherein the means adapted to calculate a SIR value for each of the plurality of transport channels in use, is adapted to apply the algorithm:

$$SIR_r(k) = kp * e(k) + ki * I(k)$$

where $k$ denotes block number, $SIR_r(k)$ denotes the SIR reference for block k, e(k) is a variable which indicates the difference between a required quality of service (QoS) and actual QoS, $kp$ and $ki$ are parameters which control algorithm convergence speed and stability and I(k+1)= I(k)+e(k).

**11.** The mobile station as claimed in claim 10, wherein the means adapted to maintain the calculated signal strength reference value for a transport channel determines the calculated signal strength reference value for the transport channel via a Proportional Integral (PI) algorithm and is **characterised by**:

$$SIR_r(l, k+1) := \begin{cases} SIR_r(l,k) + SIR_{inc} & \text{if quality criterion not met,} \\ SIR_r(l,k) - \dfrac{BLER_r(l)}{1 - BLER_r(l)} SIR_{inc} & \text{if quality criterion met.} \end{cases}$$

where $SIR_r$ is Signal-to-Interference Ratio (SIR) reference value and denotes signal strength reference value for a transport channel, $SIR_r$ $(l,k)$ denotes the SIR reference for transport channel $l$=1 ,..., N at *block k, $BLER_r(l)$* refers to the BLER reference for transport channel $l$, $SIR_{inc}$ refers to an incremental increase in the SIR reference.

**12.** The mobile station as claimed in claims 10 and 11, wherein the mobile telecommunications network uses WCDMA.

**13.** A base station (10) for use in a telecommunications network, wherein the base station comprises means for performing power control, the means for performing power control comprising:

means adapted to calculate a signal strength reference value for each of a plurality of transport channels (68, 70, 72) in use based on a previously calculated value for that transport channel, wherein the plurality of transport channels are multiplexed on a common physical channel and wherein the signal strength reference value for a transport channel is a Signal-to-Interference Ratio (SIR) value;
means adapted to maintain the calculated signal strength reference value for a transport channel at or above a predetermined minimum signal strength reference value; and
means adapted to determine a signal strength reference value to be used for all of said plurality of transport channels in use, as the highest of all of the calculated signal strength reference values;

wherein the means adapted to calculate a SIR value for each of the plurality of transport channels in use, is adapted to apply the algorithm:

$$SIR_r(k) = kp * e(k) + ki * I(k)$$

where $k$ denotes block number, $SIR_r(k)$ denotes the SIR reference for block k, e(k) is a variable which indicates the difference between a required quality of service (QoS) and actual QoS, $kp$ and $ki$ are parameters which control algorithm convergence speed and stability and I(k+1)= I(k)+e(k).

**14.** The base station as claimed in claim 13, wherein the means adapted to maintain the calculated signal strength reference value for a transport channel is adapted to determine the calculated signal strength reference value for the transport channel via a Proportional Integral (PI) algorithm and is **characterised by**:

$$SIR_r\left(l, k+1\right) := \begin{cases} SIR_r\left(l,k\right) + SIR_{inc} & \textit{if quality criterion not met}, \\ SIR_r\left(l,k\right) - \dfrac{BLER_r\left(l\right)}{1 - BLER_r\left(l\right)} SIR_{inc} & \textit{if quality criterion met}. \end{cases}$$

where $SIR_r$ is Signal-to-Interference Ratio (SIR) reference value and denotes signal strength reference value for a transport channel, $SIR_r$ *(l,k)* denotes the SIR reference for transport channel *l*=1, ...,N at block *k*, $BLER_r(l)$ refers to the BLER reference for transport channel *l*, $SIR_{inc}$ refers to an incremental increase in the SIR reference.

15. The base station as claimed in claims 13 and 14, wherein the mobile telecommunications network uses WCDMA.

16. A telecommunications network, comprising means for performing power control, the means for performing power control comprising:

means adapted to calculate a signal strength reference value for each of a plurality of transport channels (68, 70, 72) in use based on a previously calculated value for that transport channel, wherein the plurality of transport channels are multiplexed on a common physical channel and wherein the signal strength reference value for a transport channel is a Signal-to-Interference Ratio (SIR) value;
means adapted to maintain the calculated signal strength reference value for a transport channel at or above a predetermined minimum signal strength reference value; and
means adapted to determine a signal strength reference value to be used for all of said plurality of transport channels in use, as the highest of all of the calculated signal strength reference values;

wherein the means adapted to calculate a SIR value for each of the plurality of transport channels in use, is adapted to apply the algorithm:

$$SIR_r\left(k\right) = kp * e\left(k\right) + ki * I\left(k\right)$$

where *k* denotes block number, $SIR_r(k)$ denotes the SIR reference for block k, e(k) is a variable which indicates the difference between a required quality of service (QoS) and actual QoS, *kp* and *ki* are parameters which control algorithm convergence speed and stability and I(k+1)= I(k)+e(k).

17. The telecommunications network as claimed in claim 16, wherein the means adapted to maintain the calculated signal strength reference value for a transport channel is adapted to determine the calculated signal strength reference value for the transport channel via a Proportional Integral (PI) algorithm and is **characterised by**:

$$SIR_r\left(l, k+1\right) := \begin{cases} SIR_r\left(l,k\right) + SIR_{inc} & \textit{if quality criterion not mèt}, \\ SIR_r\left(l,k\right) - \dfrac{BLER_r\left(l\right)}{1 - BLER_r\left(l\right)} SIR_{inc} & \textit{if quality criterion met}. \end{cases}$$

where $SIR_r$ is Signal-to-Interference Ratio (SIR) reference value and denotes signal strength reference value for a transport channel, $SIR_r$ *(l,k)* denotes the SIR reference for transport channel 1=1, ..., N at *block k*, $BLER_r(l)$ refers to the BLER reference for transport channel 1, $SIR_{inc}$ refers to an incremental increase in the SIR reference.

18. The telecommunications network as claimed in claims 16 and 17, wherein the mobile telecommunications network uses WCDMA.

**Patentansprüche**

1. Ein Verfahren zur Leistungssteuerung in einem mobilen Telekommunikationsnetz, wobei eine Vielzahl von Transportkanälen in einem gemeinsamen physischen Kanal (76) multiplext werden, das Verfahren die Schritte umfassend:

   Kalkulieren eines jeweiligen Signalstärkebezugswertes für jeden aus der Vielzahl von Transportkanälen (68, 70, 72) in Gebrauch basierend auf einem zuvor kalkulierten Wert für diesen Transportkanal;
   Aufrechterhalten (40, 42) des kalkulierten Signalstärkebezugswertes für jeden Transportkanal auf oder über einem vorbestimmten minimalen Signalstärkebezugswert; und
   Bestimmen (44) eines Signalstärkebezugswertes, der für alle aus der Vielzahl von Transportkanälen in Gebrauch zu verwenden ist, als den höchsten von allen kalkulierten jeweiligen Signalstärkebezugswerten;

   wobei der Signalstärkebezugswert für einen Transportkanal ein Signal-Interferenz-Verhältnis- (SIR) Bezugswert ist, und wobei der Schritt zum Kalkulieren eines SIR-Bezugswertes für jeden aus der Vielzahl von Transportkanälen in Gebrauch durch Anwenden des Algorithmus:

$$SIR_r(k) = kp * e(k) + ki * I(k)$$

   durchgeführt wird, wobei k eine Blockzahl bezeichnet, $SIR_r(k)$ den SIR-Bezug für Block k bezeichnet, e(k) eine Variable ist, die die Differenz zwischen einer erforderlichen Dienstgüte (QoS, quality of service) und einer tatsächlichen QoS anzeigt, kp und ki Parameter sind, die Algorithmuskonvergenzgeschwindigkeit und Stabilität steuern und I(k+1)= I(k) + e(k).

2. Das Verfahren, wie in Anspruch 1 beansprucht, ferner umfassend inkrementelles Erhöhen oder Verringern des Signalstärkebezugswertes abhängig von einer Qualitätskriteriumsprüfung.

3. Das Verfahren, wie in Anspruch 1 beansprucht, wobei e(k) unterschiedliche Werte abhängig davon annimmt, ob ein vorbestimmtes Qualitätskriterium erfüllt ist, derart dass:

$$e(k) = -BLER_r$$

   falls das Qualitätskriterium erfüllt ist,

$$e(k) = 1-BLER_r$$

   falls das Qualitätskriterium nicht ist,
   wobei $BLER_r$ auf den Blockfehlerraten- (BLER, block error rate) Bezug verweist.

4. Das Verfahren, wie in Anspruch 1 beansprucht, wobei die Parameter:

$$kp = 0$$

$$ki = SIR_{inc}/(1- BLER_r)$$

   verwendet werden, wobei $SIR_{inc}$ auf eine inkrementelle Erhöhung in dem SIR-Bezug verweist.

5. Das Verfahren, wie in Anspruch 1, 3 und 4 beansprucht, wobei der Schritt zum Aufrechterhalten des kalkulierten Signalstärkebezugswertes für einen Transportkanal über einen Proportional-Integral- (PI) Algorithmus bestimmt wird und **gekennzeichnet ist durch**:

$$SIR_r(l,k+1) := \begin{cases} SIR_r(l,k) + SIR_{inc} & \text{falls das Qualitätskriterium nicht erfüllt ist,} \\ SIR_r(l,k) - \dfrac{BLER_r(l)}{1 - BLER_r(l)} SIR_{inc} & \text{falls das Qualitätskriterium erfüllt ist} \end{cases}$$

wobei $SIR_r(1,k)$ den SIR-Bezug für Transportkanal 1 = 1, ..., N in Block k bezeichnet, $BLER_r(1)$ auf den BLER-Bezug für Transportkanal 1 verweist.

6. Das Verfahren, wie in Anspruch 5 beansprucht wobei die Qualitätskriteriumsprüfung auf einem Bitfehlerraten-(BER) Bezugswert basiert.

7. Das Verfahren, wie in Anspruch 5 beansprucht, wobei die Qualitätskriteriumsprüfung auf einem Zyklusredundanzprüfungs- (CRC, Cyclic Redundancy Check) Bezugswert basiert.

8. Das Verfahren, wie in Anspruch 5 beansprucht, umfassend Kalkulieren eines anfänglichen SIR-Bezugswertes $SIR_r$ (1, 0) für jeden aus der Vielzahl von Transportkanälen in Gebrauch für einen Anfangsblock k=0 als:

$$SIR_r(l,0) = \frac{1}{b_2}(\log_{10}(BLER_r(l)) - a_2)$$

wobei $a_2$ und $b_2$ Transportkanal-Modellparameter sind.

9. Das Verfahren, wie in Ansprüchen 1 bis 8 beansprucht, wobei das mobile Telekommunikationsnetz WCDMA verwendet.

10. Eine Mobilstation (18) zur Verwendung in einem Telekommunikationsnetz, wobei die Mobilstation Mittel zum Durchführen von Leistungssteuerung umfasst, das Mittel zum Durchführen von Leistungssteuerung umfassend:

Mittel, angepasst, einen Signalstärkebezugswert für jeden aus einer Vielzahl von Transportkanälen (68, 70, 72) in Gebrauch basierend auf einem zuvor kalkulierten Wert für diesen Transportkanal zu kalkulieren, wobei die Vielzahl von Transportkanälen auf einem gemeinsamen physischen Kanal multiplext sind und wobei der Signalstärkebezugswert für einen Transportkanal ein Signal-Interferenz-Verhältnis- (SIR) Wert ist;
Mittel, angepasst, den kalkulierten Signalstärkebezugswert für einen Transportkanal auf oder über einem vorbestimmten minimalen Signalstärkebezugswert aufrechtzuerhalten; und
Mittel, angepasst, einen Signalstärkebezugswert, der für alle aus der Vielzahl von Transportkanälen in Gebrauch zu verwenden ist, als den höchsten von allen der kalkulierten Signalstärkebezugswerte zu bestimmen;

wobei das Mittel, das angepasst ist, einen SIR-Wert für jeden aus der Vielzahl von Transportkanälen in Gebrauch zu kalkulieren, angepasst ist, den Algorithmus

$$SIR_r(k) = kp * e(k) + ki * I(k)$$

anzuwenden, wobei k eine Blockzahl bezeichnet, $SIR_r(k)$ den SIR-Bezug für Block k bezeichnet, e(k) eine Variable ist, die die Differenz zwischen einer erforderlichen Dienstgüte (QoS) und einer tatsächlichen QoS anzeigt, kp und ki Parameter sind, die Algorithmuskonvergenzgeschwindigkeit und Stabilität steuern und I(k+1) = I(k) + e(k).

11. Die Mobilstation, wie in Anspruch 10 beansprucht, wobei das Mittel, das angepasst ist, den kalkulierten Signalstärkebezugswert für einen Transportkanal aufrechtzuerhalten, den kalkulierten Signalstärkebezugswert für den Transportkanal über einen Proportional-Integral- (PI) Algorithmus bestimmt und **gekennzeichnet ist durch**:

$$SIR_r(l,k+1) := \begin{cases} SIR_r(l,k) + SIR_{inc} & \text{falls das Qualitätskriterium nicht erfüllt ist,} \\ SIR_r(l,k) - \dfrac{BLER_r(l)}{1 - BLER_r(l)} SIR_{inc} & \text{falls das Qualitätskriterium erfüllt ist} \end{cases}$$

wobei $SIR_r$ ein Signal-Interferenz-Verhältnis- (SIR) Bezugswert ist und einen Signalstärkebezugswert für einen Transportkanal bezeichnet, $SIR_r$ (1,k) den SIR-Bezug für Transportkanal I = 1, ..., N in Block k bezeichnet, $BLER_r$ (I) auf den BLER-Bezug für Transportkanal I verweist, $SIR_{inc}$ auf eine inkrementelle Erhöhung in dem SIR-Bezug verweist.

**12.** Die Mobilstation, wie in Ansprüchen 10 und 11 beansprucht, wobei das mobile Telekommunikationsnetz WCDMA verwendet.

**13.** Eine Basisstation (10) zur Verwendung in einem Telekommunikationsnetz, wobei die Basisstation Mittel zum Durchführen von Leistungssteuerung umfasst, das Mittel zum Durchführen von Leistungssteuerung umfassend:

Mittel, angepasst, einen Signalstärkebezugswert für jeden aus einer Vielzahl von Transportkanälen (68, 70, 72) in Gebrauch basierend auf einem zuvor kalkulierten Wert für diesen Transportkanal zu kalkulieren, wobei die Vielzahl von Transportkanälen auf einem gemeinsamen physischen Kanal multiplext sind und wobei der Signalstärkebezugswert für einen Transportkanal ein Signal-Interferenz-Verhältnis- (SIR) Wert ist;
Mittel, angepasst, den kalkulierten Signalstärkebezugswert für einen Transportkanal auf oder über einem vorbestimmten minimalen Signalstärkebezugswert aufrechtzuerhalten; und
Mittel, angepasst, einen Signalstärkebezugswert, der für alle aus der Vielzahl von Transportkanälen in Gebrauch zu verwenden ist, als den höchsten von allen der kalkulierten Signalstärkebezugswerte zu bestimmen;

wobei das Mittel, das angepasst ist, einen SIR-Wert für jeden aus der Vielzahl von Transportkanälen in Gebrauch zu kalkulieren, angepasst ist, den Algorithmus

$$SIR_r(k) = kp * e(k) + ki * I(k)$$

anzuwenden, wobei k eine Blockzahl bezeichnet, $SIR_r(k)$ den SIR-Bezug für Block k bezeichnet, e(k) eine Variable ist, die die Differenz zwischen einer erforderlichen Dienstgüte (QoS) und einer tatsächlichen QoS anzeigt, kp und ki Parameter sind, die Algorithmuskonvergenzgeschwindigkeit und Stabilität steuern und I(k+1) = I(k) + e(k).

**14.** Die Basisstation, wie in Anspruch 13 beansprucht, wobei das Mittel, das angepasst ist, den kalkulierten Signalstärkebezugswert für einen Transportkanal aufrechtzuerhalten, angepasst ist, den kalkulierten Signalstärkebezugswert für den Transportkanal über einen Proportional-Integral- (PI) Algorithmus zu bestimmen und **gekennzeichnet ist durch**:

$$SIR_r(l,k+1) := \begin{cases} SIR_r(l,k) + SIR_{inc} & \text{falls das Qualitätskriterium nicht erfüllt ist,} \\ SIR_r(l,k) - \dfrac{BLER_r(l)}{1 - BLER_r(l)} SIR_{inc} & \text{falls das Qualitätskriterium erfüllt ist} \end{cases}$$

wobei $SIR_r$ ein Signal-Interferenz-Verhältnis- (SIR) Bezugswert ist und einen Signalstärkebezugswert für einen Transportkanal bezeichnet, $SIR_r$ (l,k) den SIR-Bezug für Transportkanal 1 = 1, ..., N in Block k bezeichnet, $BLER_r$ (1) auf den BLER-Bezug für Transportkanal 1 verweist, $SIR_{inc}$ auf eine inkrementelle Erhöhung in dem SIR-Bezug verweist.

**15.** Die Basisstation, wie in Ansprüchen 13 und 14 beansprucht, wobei das mobile Telekommunikationsnetz WCDMA verwendet.

**16.** Ein Telekommunikationsnetz, umfassend Mittel zum Durchführen von Leistungssteuerung, das Mittel zum Durchführen von Leistungssteuerung umfassend:

Mittel, angepasst, einen Signalstärkebezugswert für jeden aus einer Vielzahl von Transportkanälen (68, 70, 72) in Gebrauch basierend auf einem zuvor kalkulierten Wert für diesen Transportkanal zu kalkulieren, wobei die Vielzahl von Transportkanälen auf einem gemeinsamen physischen Kanal multiplext sind und wobei der Signalstärkebezugswert für einen Transportkanal ein Signal-Interferenz-Verhältnis- (SIR) Wert ist;
Mittel, angepasst, den kalkulierten Signalstärkebezugswert für einen Transportkanal auf oder über einem vorbestimmten minimalen Signalstärkebezugswert aufrechtzuerhalten; und
Mittel, angepasst, einen Signalstärkebezugswert, der für alle aus der Vielzahl von Transportkanälen in Gebrauch zu verwenden ist, als den höchsten von allen der kalkulierten Signalstärkebezugswerte zu bestimmen;

wobei das Mittel, das angepasst ist, einen SIR-Wert für jeden aus der Vielzahl von Transportkanälen in Gebrauch zu kalkulieren, angepasst ist, den Algorithmus

$$SIR_r(k) = kp * e(k) + ki * I(k)$$

anzuwenden, wobei k eine Blockzahl bezeichnet, $SIR_r(k)$ den SIR-Bezug für Block k bezeichnet, e(k) eine Variable ist, die die Differenz zwischen einer erforderlichen Dienstgüte (QoS) und einer tatsächlichen QoS anzeigt, kp und ki Parameter sind, die Algorithmuskonvergenzgeschwindigkeit und Stabilität steuern und I(k+1) = I(k) + e(k).

**17.** Das Telekommunikationsnetz, wie in Anspruch 16 beansprucht, wobei das Mittel, das angepasst ist, den kalkulierten Signalstärkebezugswert für einen Transportkanal aufrechtzuerhalten, angepasst ist, den kalkulierten Signalstärkebezugswert für den Transportkanal über einen Proportional-Integral- (PI) Algorithmus zu bestimmen und **gekennzeichnet ist durch**:

$$SIR_r(l, k+1) := \begin{cases} SIR_r(l, k) + SIR_{inc} & \text{falls das Qualitätskriterium nicht erfüllt ist,} \\ SIR_r(l, k) - \dfrac{BLER_r(l)}{1 - BLER_r(l)} SIR_{inc} & \text{falls das Qualitätskriterium erfüllt ist} \end{cases}$$

wobei $SIR_r$ ein Signal-Interferenz-Verhältnis- (SIR) Bezugswert ist und einen Signalstärkebezugswert für einen Transportkanal bezeichnet, $SIR_r$ (1,k) den SIR-Bezug für Transportkanal l = 1, ..., N in Block k bezeichnet, $BLER_r$ (1) auf den BLER-Bezug für Transportkanal l verweist, $SIR_{inc}$ auf eine inkrementelle Erhöhung in dem SIR-Bezug verweist.

**18.** Das Telekommunikationsnetz, wie in Ansprüchen 16 und 17 beansprucht, wobei das mobile Telekommunikationsnetz WCDMA verwendet.

**Revendications**

**1.** Procédé de commande de la puissance dans un réseau de télécommunications mobiles, dans lequel une pluralité de canaux de transport sont multiplexés sur un canal physique commun (76), le procédé comprenant les étapes consistant à :

calculer une valeur de référence des intensités de signal respectives, pour chacun des canaux de transport de la pluralité de canaux de transport (68, 70, 72) en service, sur la base d'une valeur calculée antérieurement pour ce canal de transport ;
maintenir (40, 42) la valeur de référence calculée pour l'intensité du signal, pour chaque canal de transport, égale ou supérieure à une valeur de référence minimale prédéterminée de l'intensité du signal ; et
déterminer (44) une valeur de référence de l'intensité du signal, à utiliser pour tous les canaux de transport de ladite pluralité de canaux de transport en service, qui est la plus élevée des valeurs de référence calculées des intensités de signal respectives ;

dans lequel la valeur de référence de l'intensité du signal, pour un canal de transport, est une valeur de référence de rapport signal/interférences (SIR, pour « *Signal to Interference Ratio* ») et dans lequel l'étape de calcul d'une valeur de référence de SIR, pour chacun des canaux de transport dans la pluralité de canaux de transport en service, est exécutée en appliquant l'algorithme suivant :

$$\mathtt{SIR_r(k) \ = \ kp \ * \ e(k)+ki \ * \ I(k)}$$

où k dénote le numéro de bloc, $SIR_r(k)$ dénote la référence de SIR pour le bloc k, e(k) est une variable qui indique la différence entre une qualité de service demandée et la qualité de service réelle, kp et ki sont des paramètres qui commandent la vitesse de convergence et la stabilité de l'algorithme et I(k+1) = I (k) +e (k) .

2.  Procédé selon la revendication 1, comprenant en outre l'étape consistant à augmenter ou diminuer progressivement la valeur de référence de l'intensité du signal en fonction de la vérification d'un critère de qualité.

3.  Procédé selon la revendication 1, dans lequel e(k) prend différentes valeurs suivant qu'un critère de qualité prédéterminé est satisfait ou non, à savoir
    e(k) = -$BLER_r$ si le critère de qualité est satisfait,
    e(k) = 1 - $BLER_r$ si le critère de qualité n'est pas satisfait,
    où $BLER_r$ désigne la référence de taux d'erreur sur blocs.

4.  Procédé selon la revendication 1, dans lequel on utilise les paramètres

$$\mathtt{kp \ = \ 0}$$

$$\mathtt{ki \ = \ SIR_{inc} \ / \ (1 \ - \ BLER_r)}$$

où $SIR_{inc}$ désigne une augmentation progressive de la référence de SIR.

5.  Procédé selon les revendications 1, 3 et 4, dans lequel l'étape de maintien de la valeur de référence calculée de l'intensité du signal, pour un canal de transport, est déterminée par un algorithme proportionnel intégral (PI) et est **caractérisée par**

$$SIR_r(l,k+1) := \begin{cases} SIR_r(l,k) + SIR_{inc} & \text{si le critère de qualité n'est pas satisfait,} \\ SIR_r(l,k) - \dfrac{BLER_r(l)}{1-BLER_r(l)} SIR_{inc} & \text{si le critère de qualité est satisfait,} \end{cases}$$

où $SIR_r(1, k)$ désigne la référence de SIR pour le canal de transport 1 = 1 à N, au bloc k, $BLER_r(1)$ désigne la référence de BLER pour le canal de transport 1.

6.  Procédé selon la revendication 5, dans lequel la vérification du critère de qualité est fondée sur une valeur de référence de taux d'erreur sur bits (BER).

7.  Procédé selon la revendication 5, dans lequel la vérification du critère de qualité est fondée sur une valeur de référence de contrôle cyclique de redondance (CRC).

**8.** Procédé selon la revendication 5, comprenant l'étape consistant à calculer une valeur de référence initiale de SIR, $SIR_r(1, 0)$, pour chacun des canaux de transport dans la pluralité de canaux de transport en service et pour un bloc initial k = 0, sous la forme :

$$SIR_r(1, 0) = 1/b_2 \; (\log_{10}(BLER_r(1)) - a_2)$$

où $a_2$ et $b_2$ sont des paramètres du modèle du canal de transport.

**9.** Procédé selon les revendications 1 à 8, dans lequel le réseau de télécommunications mobiles utilise l'AMRC à large bande.

**10.** Station mobile (18) destinée à être utilisée dans un réseau de télécommunications, la station mobile comprenant un moyen de réaliser la commande de la puissance et le moyen de réaliser la commande de la puissance comprenant :

un moyen adapté pour calculer une valeur de référence d'intensité du signal, pour chacun des canaux de transport d'une pluralité de canaux de transport (68, 70, 72) en service, sur la base d'une valeur calculée antérieurement pour ce canal de transport, la pluralité de canaux de transport étant multiplexés sur un canal physique commun et la valeur de référence de l'intensité du signal, pour un canal de transport, étant une valeur de rapport signal/interférences (SIR) ;
un moyen adapté pour maintenir la valeur de référence calculée pour l'intensité du signal, pour un canal de transport, égale ou supérieure à une valeur de référence minimale prédéterminée de l'intensité du signal ; et
un moyen adapté pour déterminer une valeur de référence de l'intensité du signal, à utiliser pour tous les canaux de transport de ladite pluralité de canaux de transport en service, qui est la plus élevée des valeurs de référence calculées de l'intensité du signal ;

dans laquelle le moyen adapté pour calculer une valeur de SIR, pour chacun des canaux de transport dans la pluralité de canaux de transport en service, est adapté pour appliquer l'algorithme suivant :

$$SIR_r(k) = kp * e(k) + ki * I(k)$$

où k dénote le numéro de bloc, $SIR_r(k)$ dénote la référence de SIR pour le bloc k, e(k) est une variable qui indique la différence entre une qualité de service demandée (QoS) et la qualité de service réelle QoS, kp et ki sont des paramètres qui commandent la vitesse de convergence et la stabilité de l'algorithme et I(k+1) = I(k)+e(k).

**11.** Station mobile selon la revendication 10, dans laquelle le moyen adapté pour maintenir la valeur de référence calculée de l'intensité du signal, pour un canal de transport, détermine la valeur de référence calculée de l'intensité du signal par un algorithme proportionnel intégral (PI) et est **caractérisé par**

$$SIR_r(l, k+1) := \begin{cases} SIR_r(l,k) + SIR_{inc} & \text{si le critère de qualité n'est pas satisfait,} \\ SIR_r(l,k) - \dfrac{BLER_r(l)}{1 - BLER_r(l)} SIR_{inc} & \text{si le critère de qualité est satisfait,} \end{cases}$$

où $SIR_r$ est la valeur de référence du rapport signal/interférences (SIR) et désigne une valeur de référence de l'intensité du signal pour un canal de transport, $SIR_r(l, k)$ désigne la référence de SIR pour le canal de transport 1 = 1 à N, au bloc k, $BLER_r(l)$ désigne la référence de BLER pour le canal de transport 1, $SIR_{inc}$ désigne une augmentation progressive de la référence de SIR.

**12.** Station mobile selon les revendications 10 et 11, dans laquelle le réseau de télécommunications mobiles utilise l'AMRC à large bande.

**13.** Station de base (10) destinée à être utilisée dans un réseau de télécommunications, la station de base comprenant un moyen de réaliser la commande de la puissance et le moyen de réaliser la commande de la puissance comprenant :

un moyen adapté pour calculer une valeur de référence d'intensité du signal, pour chacun des canaux de transport d'une pluralité de canaux de transport (68, 70, 72) en service, sur la base d'une valeur calculée antérieurement pour ce canal de transport, la pluralité de canaux de transport étant multiplexés sur un canal physique commun et la valeur de référence de l'intensité du signal, pour un canal de transport, étant une valeur de rapport signal/interférences (SIR) ;
un moyen adapté pour maintenir la valeur de référence calculée pour l'intensité du signal, pour un canal de transport, égale ou supérieure à une valeur de référence minimale prédéterminée de l'intensité du signal ; et
un moyen adapté pour déterminer une valeur de référence de l'intensité du signal, à utiliser pour tous les canaux de transport de ladite pluralité de canaux de transport en service, qui est la plus élevée de toutes les valeurs de référence calculées des intensités de signal ;

dans laquelle le moyen adapté pour calculer une valeur de SIR, pour chacun des canaux de transport dans la pluralité de canaux de transport en service, est adapté pour appliquer l'algorithme suivant :

$$SIR_r(k) = kp * e(k) + ki * I(k)$$

où k dénote le numéro de bloc, $SIR_r(k)$ dénote la référence de SIR pour le bloc k, e(k) est une variable qui indique la différence entre une qualité de service demandée (QoS) et la qualité de service réelle QoS, kp et ki sont des paramètres qui commandent la vitesse de convergence et la stabilité de l'algorithme et I(k+1) = I(k)+e(k).

**14.** Station de base selon la revendication 13, dans laquelle le moyen adapté pour maintenir la valeur de référence calculée de l'intensité du signal, pour un canal de transport est apte à déterminer la valeur de référence calculée de l'intensité du signal par un algorithme proportionnel intégral (PI) et est **caractérisé par**

$$SIR_r(l,k+1) := \begin{cases} SIR_r(l,k) + SIR_{inc} & \text{si le critère de qualité n'est pas satisfait,} \\ SIR_r(l,k) - \dfrac{BLER_r(l)}{1-BLER_r(l)} SIR_{inc} & \text{si le critère de qualité est satisfait,} \end{cases}$$

où $SIR_r$ est la valeur de référence du rapport signal/interférences (SIR) et désigne une valeur de référence de l'intensité du signal pour un canal de transport, $SIR_r(1, k)$ désigne la référence de SIR pour le canal de transport 1 = 1 à N, au bloc k, $BLER_r(1)$ désigne la référence de BLER pour le canal de transport 1, $SIR_{inc}$ désigne une augmentation progressive de la référence de SIR.

**15.** Station de base selon les revendications 13 et 14, dans laquelle le réseau de télécommunications mobiles utilise l'AMRC à large bande.

**16.** Réseau de télécommunications, comprenant un moyen de réaliser la commande de la puissance, le moyen de réaliser la commande de la puissance comprenant :

un moyen adapté pour calculer une valeur de référence d'intensité du signal, pour chacun des canaux de transport d'une pluralité de canaux de transport (68, 70, 72) en service, sur la base d'une valeur calculée antérieurement pour ce canal de transport, la pluralité de canaux de transport étant multiplexés sur un canal physique commun et la valeur de référence de l'intensité du signal, pour un canal de transport, étant une valeur de rapport signal/interférences (SIR) ;
un moyen adapté pour maintenir la valeur de référence calculée pour l'intensité du signal, pour un canal de transport, égale ou supérieure à une valeur de référence minimale prédéterminée de l'intensité du signal ; et
un moyen adapté pour déterminer une valeur de référence de l'intensité du signal, à utiliser pour tous les canaux de transport de ladite pluralité de canaux de transport en service, qui est la plus élevée des valeurs de référence calculées de l'intensité du signal ;

dans lequel le moyen adapté pour calculer une valeur de SIR, pour chacun des canaux de transport dans la pluralité de canaux de transport en service, est adapté pour appliquer l'algorithme suivant :

$$\mathtt{SIR_r(k) = kp * e(k)+ki * I(k)}$$

où k dénote le numéro de bloc, $SIR_r(k)$ dénote la référence de SIR pour le bloc k, e(k) est une variable qui indique la différence entre une qualité de service demandée (QoS) et la qualité de service réelle QoS, kp et ki sont des paramètres qui commandent la vitesse de convergence et la stabilité de l'algorithme et I(k+1) = I (k)+e(k) .

17. Réseau de télécommunications selon la revendication 16, dans lequel le moyen adapté pour maintenir la valeur de référence calculée de l'intensité du signal, pour un canal de transport, détermine la valeur de référence calculée de l'intensité du signal par un algorithme proportionnel intégral (PI) et est **caractérisé par**

$$SIR_r(l,k+1) := \begin{cases} SIR_r(l,k) + SIR_{inc} & \text{si le critère de qualité n'est pas satisfait,} \\ SIR_r(l,k) - \dfrac{BLER_r(l)}{1 - BLER_r(l)} SIR_{inc} & \text{si le critère de qualité est satisfait,} \end{cases}$$

où $SIR_r$ est la valeur de référence du rapport signal/interférences (SIR) et désigne une valeur de référence de l'intensité du signal pour un canal de transport, $SIR_r(l, k)$ désigne la référence de SIR pour le canal de transport l = 1 à N, au bloc k, $BLER_r(l)$ désigne la référence de BLER pour le canal de transport l, $SIR_{inc}$ désigne une augmentation progressive de la référence de SIR.

18. Réseau de télécommunications selon les revendications 16 et 17, dans lequel le réseau de télécommunications mobiles utilise l'AMRC à large bande.

10

12

14

16

18

Figure 1

Figure 2

20

```
                      ┌─────────────────────┐
                      │  OBTAIN SIR REFERENCE │
              30 ───  │  VALUE FOR INITIAL BLOCK │
                      │  FOR THE CHANNEL UNDER │
                      │   CONSIDERATION       │
                      └─────────────────────┘
                                │
                                ▼
          32 ─             ╱◇╲
        YES          ╱  IS QOS  ╲       NO
      ◄─────────────  ◇   OKAY?  ◇ ─────────────►
                       ╲         ╱
                        ╲◇╱
         │                                    │
         ▼                                    ▼
  ┌────────────────┐              ┌────────────────┐
  │ DECREMENT SIR  │              │ INCREMENT SIR  │
  │REFERENCE VALUE │              │REFERENCE VALUE │
  │  RESULTING IN  │              │  RESULTING IN  │
  │  UPDATED SIR   │              │  UPDATED SIR   │
  │REFERENCE VALUE │              │REFERENCE VALUE │
  └────────────────┘              └────────────────┘
   34                                        36
```

**IS UPDATED SIR REFERENCE VALUE GREATER THAN PREDETERMINED SIR MINIMUM VALUE?**

38

YES

NO

**UPDATED SIR REFERENCE VALUE TO BE USED**

40

**PREDETERMINED SIR MINIMUM VALUE TO BE USED**

42

**COMPARE USED SIR VALUE WITH USED SIR VALUES OF THE OTHER ALLOTTED CHANNELS TO DETERMINE MAXIMUM USED SIR REFERENCE VALUE**

44

Figure 3

Figure 4